# EUROPÄISCHE PATENTANMELDUNG

(11) **EP 1 589 247 A1**
(43) Veröffentlichungstag der Anmeldung: **26.10.2005**
(21) Anmeldenummer: 05004990.7
(22) Anmeldetag: 08.03.2005
(51) Int. Cl.: F16D 25/0638, F16D 65/00

(54) **Dämpfungselement für eine hydraulisch betätigte Schalteinrichtung in einem Lastschaltgetriebe.**

(30) Priorität: 22.04.2004 DE 102004019512
(71) Anmelder: ZF FRIEDRICHSHAFEN AG, 88038 Friedrichshafen (DE)
(72) Erfinder: Höfler, Hans, 88090 Immenstaad (DE); Brehmer, Udo, 88069 Tettnang (DE); Megerle, Walter, 88709 Hagnau (DE)

(57) **Zusammenfassung**

Es wird ein Schaltelement für ein Lastschaltgetriebe vorgeschlagen, welches einen Innenlamellenträger (4), einen Außenlamellenträger, einen gegen die Kraft einer Rückstellfeder (9) hydraulisch betätigbaren Kolben (8) und mindestens ein Dämpferelement (12, 13) umfasst, wobei der Momentenaufbau im Schaltelement durch das mindestens eine Dämpferelement (12, 13) während der gesamten Rutschphase des Schaltelementes modulierbar ist.

## Beschreibung

Die vorliegende Erfindung betrifft ein Schaltelement für ein Lastschaltgetriebe gemäß dem Oberbegriff des Patentanspruchs 1.

Aus dem Stand der Technik ist bekannt, bei Lastschaltgetrieben zum Anfahren, Reversieren und Schalten Lamellenkupplungen einzusetzen. Hierbei treten, insbesondere bei Getrieben, die bei land- und bauwirtschaftlich genutzten Fahrzeugen verwendet werden, beim Schließvorgang der Lamellenkupplungen Einschaltstöße auf, welche die Schaltqualität erheblich negativ beeinflussen.

Um ein dosiertes Schließen der Lamellen einer Kupplung oder Bremse zu gewährleisten, werden Tellerfedern oder gewellte Stahllamellen eingesetzt. Beispielsweise beschreibt die WO 93/14334 eine aus wenigen Lamellen gebildete Kupplung, bei der durch eine Tellerfeder Druckspitzen während einer Schaltung gedämpft werden können. Diese Lösung ist jedoch für Lamellenkupplungen von Lastschaltgetrieben nicht geeignet, da die eingesetzten Schaltelemente eine Vielzahl von Außen- und Innenlamellen aufweisen, so dass die Wirkung der Tellerfeder nicht ausreicht, um Druckspitzen effektiv zu dämpfen.

Um ein ruckfreies Schalten bei Lamellenkupplungen durch Modulieren des Momentenanstiegs in der Kupplung zu realisieren, kann nach dem Stand der Technik der Druckaufbau im Kolbenraum der Lamellenkupplung über Drucksteuerventile moduliert werden oder es wird eine Tellerfeder mit einem über eine Blende drosselbaren Ölvolumenstrom kombiniert, der den Kupplungskolben bis zum Schließen der Lamellenkupplung verschiebt. Hierbei kann die für den Fahrer während des Schaltvorgangs spürbare Beschleunigung oder Verzögerung des Fahrzeugs über die Dauer des Momentaufbaus in der Lamellenkupplung (Rutschzeit der Kupplung) beeinflusst werden.

Die beschriebenen Lösungen erfordern in nachteiliger Weise zusätzliche Bauteile, wie beispielsweise Druckmodulationsventile, entsprechende Ansteuereinheiten und Tellerfedern.

Aus der DE 195 16 728 A1 der Anmelderin ist ein Lastschaltgetriebe für ein Kraftfahrzeug bekannt, welches eine Kupplung bzw. Bremse umfasst, die einen Innenlamellenträger, einen Außenlamellenträger in Form eines Kupplungsgehäuses, einen gegen die Kraft einer Rückstellfeder hydraulisch betätigbaren Kolben und eine federartige Einrichtung, die beim Schließen des Lamellenpakets gespannt wird, aufweist. Hierbei ist die federartige Einrichtung aus mindestens einem Dämpferelement aus Gummi o.ä. gebildet, welches an der dem Lamellenpaket zugewandten Stirnseite des Kolbens angeordnet ist. Dadurch wird der Einschaltstoß beim Anlegen der Lamellen des Lamellenpakets reduziert. Hierbei wird der Momentenaufbau während der gesamten Schließphase der Kupplung nicht moduliert, da das Dämpferelement über einen kurzen Kolbenverschiebeweg wirkt.

Der vorliegenden Erfindung liegt die Aufgabe zugrunde, ausgehend von dem genannten Stand der Technik, ein Schaltelement für ein Lastschaltgetriebe anzugeben, welches eine Modulation des Momentenaufbaus während der gesamten Schließphase ermöglicht, so dass ein ruckfreies Schalten ermöglicht wird. Zudem soll das erfindungsgemäße Schaltelement im Vergleich zu herkömmlichen Schaltelementen wenig zusätzliche Bauteile aufweisen.

Diese Aufgabe wird erfindungsgemäß durch die Merkmale des Patentanspruchs 1 gelöst. Weitere Ausgestaltungen und Vorteile gehen aus den Unteransprüchen hervor.

Demnach wird ein Schaltelement für ein Lastschaltgetriebe vorgeschlagen, welches einen Innenlamellenträger, einen Außenlamellenträger, einen gegen die Kraft einer Rückstellfeder hydraulisch betätigbaren Kolben und mindestens ein Dämpferelement umfasst, bei dem der Momentenaufbau im Schaltelement durch das mindestens eine Dämpferelement während der gesamten Rutschphase des Schaltelementes modulierbar ist.

Insbesondere wird ein Schaltelement vorgeschlagen, bei dem das mindestens eine Dämpferelement ein durch die Kolbenverschiebung während der gesamten Rutschphase einen Teil der Kolbenkraft aufnehmendes Dämpferelement ist, das derart ausgelegt ist, dass es durch die Verschiebung des Kolbens über den gesamten Schließvorgang des Schaltelementes deformiert wird.

Bevorzugterweise ist das mindestens eine Dämpferelement als Gummielement ausgebildet, wobei auch gummiähnliche Materialien (d.h. mit ähnlichen Eigenschaften) eingesetzt werden können.

Gemäß der Erfindung wird das mindestens eine Dämpferelement durch die Bewegung des Kolbens über einen langen Kolbenverschiebeweg deformiert, wobei der Kraftanstieg auf das Dämpferelement bis zum Ende der Rutschzeit des Schaltelementes erfolgt. Durch den Anstieg der Kraft auf das Dämpferelement während des Deformierens bzw. Zusammendrückens ergibt sich ein Ansteigen der Kraft, die auf den Kolben gegen die Kolbenbewegung wirkt, wodurch ein Anstieg der auf die Kupplungslamellen wirkenden Kraft und somit des auf die Lamellen übertragenen Momentes bewirkt wird.

Ferner kann die Verschiebezeit des Kolbens vom Anlegen bis zum vollständigen Schließen der Kupplung durch eine Drosselung des Ölzuflusses in den Kolbenraum bestimmt bzw. variiert werden. Demnach kann durch eine Variation des Deformationsweges, der geometrischen Form und/oder der Härte des Dämpferelementes und/oder der Verschiebezeit des Kolbens bis zum Schließen des Schaltelementes die Rutschzeit des Schaltelementes beeinflusst und optimiert werden. Vorzugsweise werden diese Parameter derart gewählt, dass die Kraft, die auf das Dämpferelement wirkt, einen progressiven Anstieg aufweist.

Im Rahmen einer besonders vorteilhaften Ausführungsform der Erfindung ist vorgesehen, dass das Dämpferelement an der dem Lamellenpaket zugewandten Stirnseite des Kolbens angeordnet und vorzugsweise derart dimensioniert ist, dass es bis zum Ende der Rutschzeit des Schaltelementes mit steigender Kraft zusammengedrückt wird, wobei nach dem Ende der Rutschzeit die Stirnfläche des Kolbens zur Anlage an den Lamellen kommt, so dass die Belastung des Dämpferelementes reduziert bzw. begrenzt wird.

Besonders vorteilhaft ist hierbei eine ringförmige Ausbildung des Dämpferelementes, welches beispielsweise in einer Ringnut des Kolbens anordbar ist. Es sind aber auch weitere Ausgestaltungen sowie Anordnungen des Dämpferelementes am Kupplungskolben möglich.

Eine vorteilhafte Weiterentwicklung der Erfindung sieht vor, alternativ oder zusätzlich zum an der Stirnseite des Kolbens angeordneten Dämpferelement ein Dämpferelement an der dem Kolben abgewandten Seite des Lamellenpakets anzuordnen, vorzugsweise zwischen den Lamellen und der Endscheibe. Hierbei kann dieses Dämpferelement vorzugsweise ringförmig ausgebildet sein. Diese Anordnung ermöglicht in Kombination mit dem an der Stirnseite des Kolbens angeordneten Dämpferelement eine zusätzliche Variation zu einem progressiven Kraftanstieg auf die Lamellen und weist den weiteren Vorteil auf, dass die Verformungsenergie auf mindestens zwei Elemente verteilt wird.

Die Dämpferelemente können gemäß der Erfindung durch Anvulkanisieren am Kupplungskolben und/oder an der Endscheibe angebracht werden, was in einer kostengünstigen Herstellung des erfindungsgemäßen Schaltelementes resultiert.

Durch die erfindungsgemäße Konzeption wird eine effektive Modulation der auf die Lamellen wirkenden Kraft erzielt. Im Vergleich zu einer zur Dämpfung eingesetzten Tellerfeder ergibt sich im unteren Bereich bei gleichem Deformationsweg ein langsamerer Kraftanstieg, wobei insgesamt bei gleichem Verschiebeweg des Kolbens ein höherer Kraftanstieg erreicht wird. Des weiteren ergibt sich bei Teillastschaltungen eine bessere Schaltqualität.

Die Erfindung wird im Folgenden anhand der beigefügten Figuren beispielhaft näher erläutert. Es stellen dar:
- Figur 1: eine Schnittansicht (Längsschnitt) eines Schaltelementes gemäß einer bevorzugten Ausführungsform der vorliegenden Erfindung; und
- Figuren 2a,: 2b, 2c schematische Darstellungen der Anordnung des Dämpferelementes an dem Kupplungskolben gemäß der Erfindung.

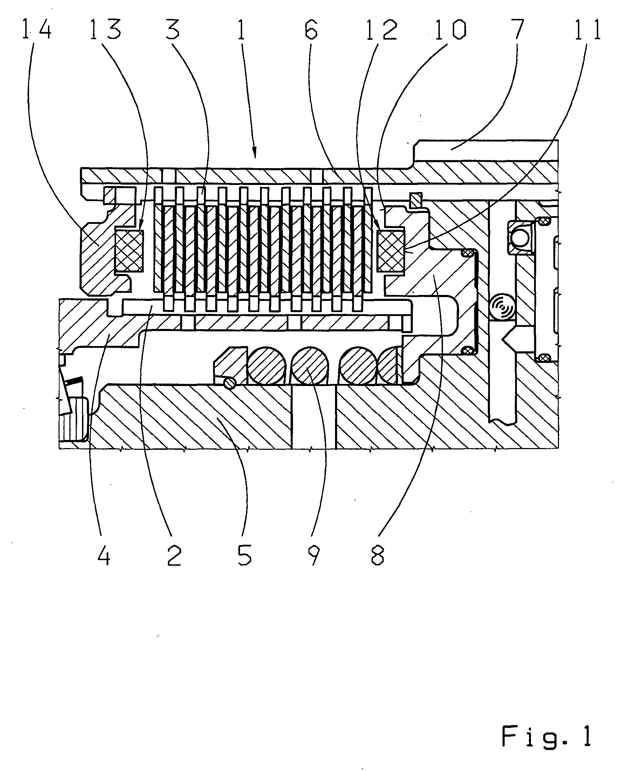

In Figur 1 ist ein Lamellenpaket 1 gezeigt, welches Innenlamellen 2 und Außenlamellen 3 umfasst, wobei die Innenlamellen mit einem Innenlamellenträger 4 drehfest verbunden sind, der auf einer Welle 5 drehbar gelagert ist. Bei dem in der Figur 1 gezeigten Beispiel sind die Außenlamellen 3 drehfest im Gehäuse 6 des Schaltelementes angeordnet, welches eine Außenverzahnung 7 aufweist. Das Schaltelement ist, wie aus dem Stand der Technik bekannt, mittels eines hydraulisch gegen die Kraft einer Feder 9 betätigbaren Kolbens 8 betätigbar.

Erfindungsgemäß ist ein erstes Dämpferelement 12 an der dem Lamellenpaket 1 zugewandten Stirnseite 10 des Kolbens 8 angeordnet. Dieses Dämpferelement 12 ist derart dimensioniert, dass es während der Verschiebung des Kolbens 8 zum Schließen des Schaltelementes bis zum Ende der Rutschzeit des Schaltelementes mit steigender Kraft zwischen Kolben 8 und Lamellenpaket 1 zusammengedrückt wird. Hierbei kommt nach dem Ende der Rutschzeit die Stirnfläche 10 des Kolbens zur Anlage an den Lamellen 1, um die Belastung des Dämpferelementes 12 zu reduzieren. Das Dämpferelement 12 ist ringförmig ausgebildet und in einer Ringnut 11 des Kolbens 8 angeordnet.

Zusätzlich zum ersten Dämpferelement 12 ist ein zweites Dämpferelement 13 an der dem Kolben 8 abgewandten Seite des Lamellenpakets 1 an der Endscheibe 14 angeordnet, um in Kombination mit dem ersten Dämpferelement 12 eine effektive Modulation des auf die Lamellen zu übertragenden Momentes zu ermöglichen und um die Verformungsenergie zu verteilen. Die Dämpferelemente 12, 13 werden erfindungsgemäß durch die Verschiebung des Kolbens 8 über den gesamten Schließvorgang des Schaltelementes (während der gesamten Rutschphase) deformiert. Im Rahmen weiterer nicht dargestellter Ausführungsformen der vorliegenden Erfindung kann nur das zweite oder nur das erste Dämpferelement vorgesehen sein.

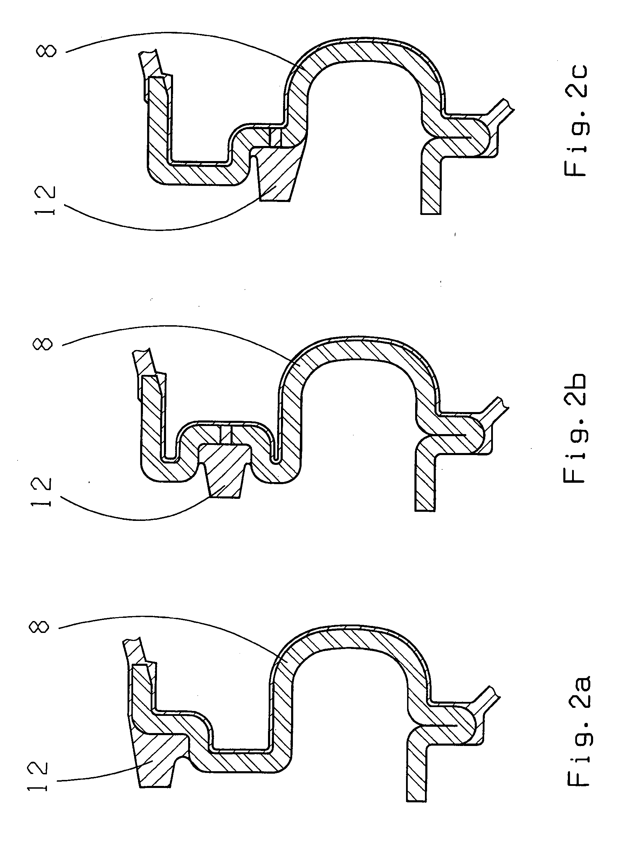

Durch eine Variation des Deformationsweges, der geometrischen Form der Ringnut 11, der geometrischen Form und/oder der Härte der Dämpferelemente und/oder der Verschiebezeit des Kolbens bis zum Schließen des Schaltelementes wird die Rutschzeit des Schaltelementes beeinflusst und optimiert. In den Figuren 2a, 2b und 2c sind unterschiedliche geometrische Ausgestaltungen des ersten Dämpferelementes 12 sowie unterschiedliche beispielhafte Anordnungsmöglichkeiten desselben am Kolben 8 gezeigt.

Selbstverständlich fällt auch jede konstruktive Ausbildung, insbesondere jede räumliche Anordnung der Dämpferelemente und die Ausbildung des Kupplungskolbens, soweit technisch sinnvoll, unter den Schutzumfang der vorliegenden Ansprüche, ohne die Funktion des Schaltelementes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Lamellenpaket
- 2: Innenlamelle
- 3: Außenlamelle
- 4: Innenlamellenträger
- 5: Welle
- 6: Gehäuse
- 7: Außenverzahnung
- 8: Kolben
- 9: Feder
- 10: Stirnfläche des Kolbens
- 11: Ringnut
- 12: Dämpferelement
- 13: Dämpferelement
- 14: Endscheibe

## Patentansprüche

1. Schaltelement für ein Lastschaltgetriebe, welches einen Innenlamellenträger (4), einen Außenlamellenträger, einen gegen die Kraft einer Rückstellfeder (9) hydraulisch betätigbaren Kolben (8) und mindestens ein Dämpferelement (12, 13) umfasst, **dadurch gekennzeichnet , dass** der Momentenaufbau im Schaltelement durch das mindestens eine Dämpferelement (12, 13) während der gesamten Rutschphase des Schaltelementes modulierbar ist.

2. Schaltelement nach Anspruch 1, **dadurch gekennzeichnet , dass** das mindestens eine Dämpferelement (12, 13) durch die Kolbenverschiebung während der gesamten Rutschphase des Schaltelementes einen Teil der Kolbenkraft aufnimmt und derart ausgelegt ist, dass es durch die Verschiebung des Kolbens über den gesamten Schließvorgang des Schaltelementes deformiert wird.

3. Schaltelement nach Anspruch 1 oder 2, **dadurch gekennzeichnet , dass** das Dämpferelement (12, 13) derart ausgelegt ist, dass ein Kraftanstieg auf das Dämpferelement (12, 13) bis zum Ende der Rutschphase des Schaltelementes erfolgt, wodurch sich ein Ansteigen der Kraft ergibt, die auf den Kolben (8) gegen die Kolbenbewegung wirkt, so dass ein progressiver Anstieg der auf das Lamellenpaket (1) wirkenden Kraft und somit des auf die Lamellen (2, 3) übertragenen Momentes bewirkt wird.

4. Schaltelement nach Anspruch 1, 2 oder 3, **dadurch gekennzeichnet , dass** die Verschiebezeit des Kolbens (8) vom Anlegen bis zum vollständigen Schließen des Schaltelementes durch eine Drosselung des Ölzuflusses in den Kolbenraum bestimmbar bzw. variierbar ist, wobei durch eine Variation des Deformationsweges, der geometrischen Form und/oder der Härte des Dämpferelementes (12, 13) und/oder der Verschiebezeit des Kolbens (8) bis zum Schließen des Schaltelementes die Rutschzeit des Schaltelementes optimierbar ist.

5. Schaltelement nach einem der vorangehenden Ansprüche, **dadurch gekennzeichnet, dass** das Dämpferelement (12) an der dem Lamellenpaket (1) zugewandten Stirnseite des Kolbens (8) angeordnet ist.

6. Schaltelement nach Anspruch 5, **dadurch gekennzeichnet , dass** das Dämpferelement (12) derart dimensioniert ist, dass es bis zum Ende der Rutschzeit des Schaltelementes mit steigender Kraft zusammengedrückt wird, wobei nach dem Ende der Rutschzeit die Stirnfläche (10) des Kolbens zur Anlage an den Lamellen (2, 3) kommt, so dass die Belastung des Dämpferelementes (12) reduziert wird.

7. Schaltelement nach Anspruch 5 oder 6, **dadurch gekennzeichnet, dass** das Dämpferelement (12) ringförmig ausgebildet ist.

8. Schaltelement nach Anspruch 7, **dadurch gekennzeichnet , dass** das Dämpferelement (12) in einer Ringnut (11) des Kolbens (8) angeordnet ist.

9. Schaltelement nach einem der Ansprüche 1 bis 4, **dadurch gekennzeichnet, dass** das Dämpferelement (13) an der dem Kolben (8) abgewandten Seite des Lamellenpakets (1) zwischen den Lamellen und der Endscheibe (14) angeordnet ist.

10. Schaltelement nach Anspruch 9, **dadurch gekennzeichnet , dass** das Dämpferelement (13) ringförmig ausgebildet ist.

11. Schaltelement nach einem der Ansprüche 1 bis 4, **dadurch gekennzeichnet, dass** es ein Dämpferelement (12) nach einem der Ansprüche 5 bis 8 und ein Dämpferelement (13) nach einem der Ansprüche 9 oder 10 aufweist.

12. Schaltelement nach einem der vorangehenden Ansprüche, **dadurch gekennzeichnet, dass** das zumindest eine Dämpferelement (12, 13) als Gummielement ausgebildet ist.

13. Schaltelement nach einem der vorangehenden Ansprüche, **dadurch gekennzeichnet, dass** das zumindest eine Dämpferelement (12, 13) durch Anvulkanisieren am Kupplungskolben (8) und/oder an der Endscheibe (14) anbringbar ist.
